# EUROPEAN PATENT SPECIFICATION

(11) **EP 0 589 662 B1**
(45) Date of publication and mention of the grant of the patent: **16.08.2001**
(21) Application number: 93307434.6
(22) Date of filing: 20.09.1993
(51) Int. Cl.: G06F 12/06, G06F 13/16

(54) **Digital signal processing system**
Digitalsignalverarbeitungssystem
Système de traitement de signal numérique

(30) Priority: 21.09.1992 KR 9217211
(43) Date of publication of application: 30.03.1994
(73) Proprietor: SAMSUNG ELECTRONICS CO., LTD., Suwon-city, Kyungki-do 441-373 (KR)
(72) Inventor: Lee, Bangwon, Kwangmyung, Kyungki-do (KR); Kim, Donghoi, Bucheon, Kyungki-do (KR)
(74) Representative: Kensett, John Hinton

(56) References cited:
- EP-A- 0 421 627
- WO-A-89/05488
- PROCEEDINGS OF THE INTERNATIONAL SYMPOSIUM ON CIRCUITS AND SYSTEMS, SAN DIEGO, MAY 10 - 13, 1992, vol. 2 OF 6, 10 May 1992 INSTITUTE OF ELECTRICAL AND ELECTRONICS ENGINEERS, pages 1011-1014, XP 000338125 FARSHID MOUSSAVI ET AL 'STATISTICAL MEMORY MANAGEMENT FOR DIGITAL SIGNAL PROCESSING'

## Description

The present invention relates to a digital signal processing system, and more particularly to a high speed digital signal processing system for effectively accessing a large amount of memory information having a delay time larger than a system clock by means of time sharing of the pipeline method and by the system clock of one cycle of a single high speed digital signal processor.

A digital signal processing system for converting analog signals into digital signals includes a memory for saving data and a device for operating the digital signal. The system obtains a result by operation of the data. However, the overall processing speed has heretofore been limited because the time delay for accessing the data in the memory is larger than that of the operation device.

In general, a conventional digital signal processing system is constructed to use only one memory to one digital signal processor. Therefore, a system clock period larger than the data access time delay in the memory is required since the system clock of the digital signal processor is set on the basis of data access time delay in memory.

The document Computer Architecture News, 18^{th} Annual Symposium or Computer Architecture, 19 May 1991, No. 3, New York, US, B. RAMAKRISHNA RAU: "Pseudo-Randomly Interleaved Memory, pages 74-83 discloses various interleaving schemes and corresponding memory architectures used in computer systems such as super computers.

The signal processing system using the digital signal processor must use real time processing, which is an enormous operation. Therefore, the digital signal processor for real time processing is restricted and is difficult to embody due to the influence of the memory with a very large time delay. Thus, for a long time, digital signal processing systems have adopted a form in which a plurality of digital signal processors are connected in parallel to a plurality of memories.

An object of the present invention is to provide an improved digital signal processing system that is capable of accessing effectively a plurality of memories, which are connected in parallel to a single digital signal processor by a method involving time sharing of a pipeline.

According to the present invention there is provided a digital processing system comprising: a digital signal processor coupled to a high speed address bus and a high speed data bus, said digital signal processor generating a series of memory addresses on the high speed address bus synchronized to a system clock; an address demultiplexer receiving the memory address series and sequentially distributing each individual address to one of a plurality of low speed address buses, said each low speed address bus having lower speed than said high speed address bus; a plurality of memories having data access delay time greater than a period of the system clock, each memory coupled to one of the low speed address buses and coupled to one of a plurality of low speed data buses for transferring data from said each memory, said each low speed data bus having lower speed than said high speed address bus; a data multiplexer receiving data from each memory through each low speed data bus and multiplexing the data; and a plurality of registers for temporarily storing the data multiplexed by said data multiplexer and supplying the data to said digital signal processor through the high speed data bus.

According to a preferred embodiment of the present invention, the system clock synchronizes the digital signal processor, demultiplexer, and multiplexer. It is thereby possible to effectively access a plurality of memories by means of time sharing. As a result, the system performance restricted within large memory access time delay is improved.

According to the present invention, in a further aspect, there is provided a digital processing method comprising generating, by a digital signal processor, a series of memory addresses synchronized to a system clock; applying the addresses at high speed to an address demultiplexer and causing said address demultiplexer to sequentially distribute each individual address, at a low speed, over one of a plurality of low speed connections to a respective one of a plurality of memories, each memory having data access delay time greater than a period of the data clock, and each memory being coupled to one of the low speed connections; supplying data from each memory at low speed to a data multiplexer; multiplexing the data; temporarily storing the multiplexed data in a plurality of registers; and supplying the data, at high speed, from the registers to the digital signal processor.

Embodiments of the invention will now be described by way of example only, with reference to the accompanying drawings, in which;
Figure 1 is a block diagram of a digital signal processing system in accordance with an embodiment of this invention; and
Figure 2(A) to 2(K) are waveforms showing the operation of the circuit shown in Figure 1.

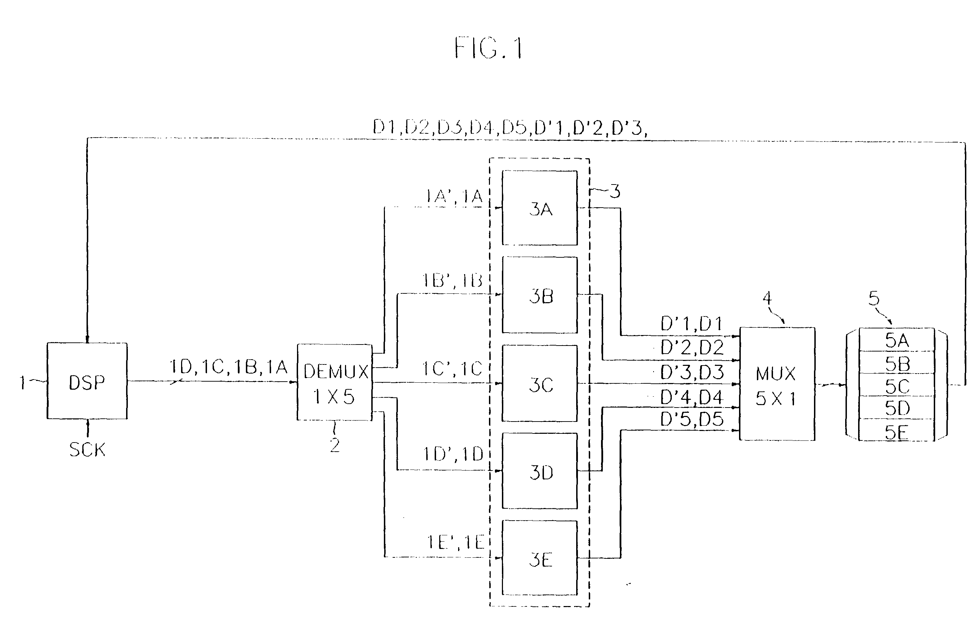

Referring to Figure 1, the system comprises a digital signal processor 1 generating address signals A, B, C, D and E in accordance with a system clock SCK, having a high speed operational function. The address signals A, B, C, D and E of the digital signal processor 1 are gradually divided and suppled to a memory block 3 connected in parallel through a 1x5 demultiplexer 2. The memory block 3, for example, consists of five memories, generally 3A to 3E.

Generally, the processing speed of each memory (3A to 3E) is slower than the digital signal processor 1. Each memory outputs data corresponding to the address of each memory in response to each address signal (A to E). Each portion of data is selectively stored in a respective one of five registers (5A to 5E) corresponding to each memory through a 5x1 multiplexer 4. The data temporarily stored at said registers (5A to 5E) is fedback to the digital signal processor 1.

In the illustrated embodiment, the memory block 3 consists of five memories. The number of memories is determined by the value resulting from dividing the data access delay time of one memory by a system clock period of the digital signal processor. For example, in the case where the data access delay time of the memory is 100 nanoseconds and the system clock period of the digital signal processor is 20 nanoseconds, five memories can be established in the memory block 3.

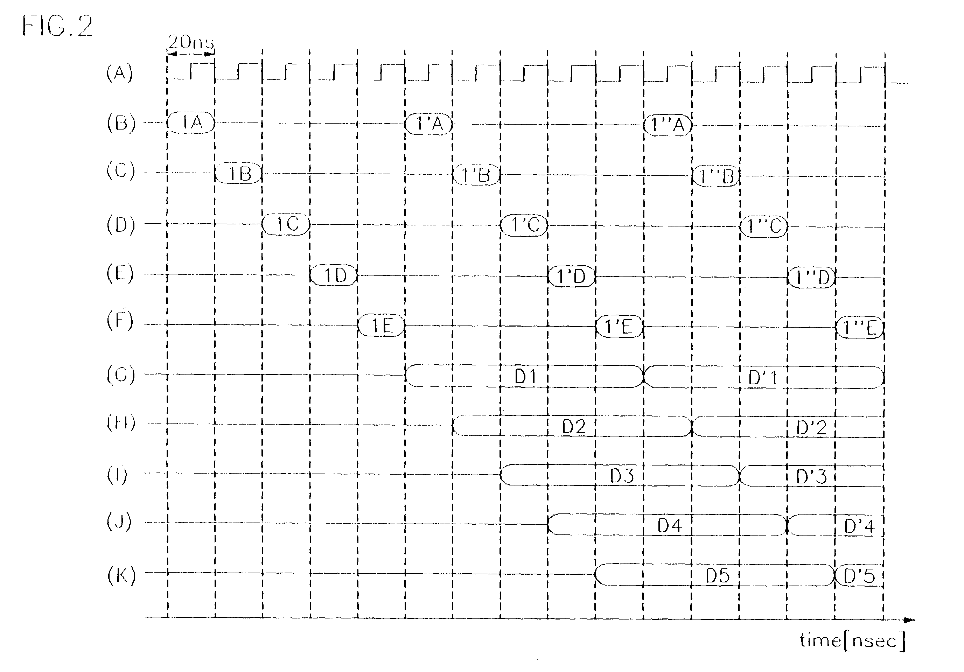

Figures 2(A) to 2(K) are waveforms illustrating the signals output from the components of Figure 1. The system clock of 20ns is input periodically to the digital signal processor 1, and then the digital signal processor 1 outputs address signals 1A to 1E corresponding to the system clock SCK. The waveforms of the system clock SCK is shown in Figure 2(A).

Figures 2(B) to 2(F) illustrate address signals 1A to 1E which access five memories 3A to 3E. First, the first memory 3A is accessed by the signal 1A since the 1x5 demultiplexer sequentially outputs the address signals. Successively, the second to fifth memories 3B to 3E are accessed by the signals 2B to 2E per 20ns, respectively.

After 100ns, referring now to Figures 2(G) to 2(K), it may be seen that the memories 3A to 3E are sequentially output the data D1 to D5 corresponding to the address of each memory per 20ns. For example, the third memory 3C is output the data D3 after 130ns. At the same time, the data D1 to D5 are sequentially stored in the registers 5A to 5E respectively, through the 5x1 multiplexer 4. Similarly, the data from the memory is gradually stored in the register 5 at intervals of 20ns. The switching time of the multiplexer which is gradually selected and output is equal to the system clock SCK and the demultiplexer 2.

The data stored in the registers 5A to 5E is fed back to the digital signal processor 1. Successively, the memory block 3 may be input new address signals 1A' to 1E' and output new data D'1 to D'5. This then repeats.

According to the present invention, a memory can be used in this system even if the memory is of relatively low processing speed compared to the digital signal processor. If the system clock cycle is intended to be α times and the memory access time delay is intended to be β times, the address signals 1A, 1B, 1C, 1D and 1E are available for α, 2α, 3α, 4α, and 5α times, respectively. Also, the effective times of the data D1, D2, D3, D4, and D5 are available for β, α+β, 2α+β, 3α+β, and 4α+β, respectively. Accordingly, it is possible to access the memory having a delay times β larger than α cycle within one system clock cycle α.

As described above, in embodiments of the present invention there can be accessed the memory information by the system clock of one cycle as a consequence of using one digital signal processor connected in parallel to the plurality of memories. As a result, high speed processing is enabled despite the time delay of the memory. Thus, the invention is useful for a digital signal processing system having a large amount of memory to process a large amount of data within a short time.

## Claims

1. A digital processing system comprising:
a digital signal processor (1) coupled to a high speed address bus and a high speed data bus, said digital signal processor generating a series of memory addresses on the high speed address bus synchronised to a system clock;
an address demultiplexer (2) receiving the memory address series and sequentially distributing each individual address to one of a plurality of low speed address buses synchronised to the system clock, said each low speed address bus having lower speed than said high speed address bus;
a plurality of memories (3A - 3E) having data access delay time greater than a period of the system clock, each memory (3A-3E) coupled to one of the low speed address buses and coupled to one of a plurality of low speed data buses for transferring data from said each memory, said each low speed data bus having lower speed than said high speed address bus;
a data multiplexer (4) receiving data from each memory (3A-3E) through each low speed data bus and multiplexing the data synchronised to the system clock; and
a plurality of registers (5A - 5E) for temporarily storing the data multiplexed by said data multiplexer (4) and supplying the data to said digital signal processor (1) through the high speed data bus.

2. A digital processing system according to Claim 1,
wherein the number of said memories (3A-3E) is approximately equal to the ratio of the data access delay time to the period of the system clock.

3. A digital processing method comprising generating, by a digital signal processor (1), a series of memory addresses synchronised to a system clock;
applying the addresses at high speed to an address demultiplexer (2) and causing said address demultiplexer (2) to sequentially distribute each individual address, at a low speed, over one of a plurality of low speed connections to a respective one of a plurality of memories (3A-3E) each memory (3A-3E) having data access delay time greater than a period of the data clock, and each memory (3A-3E) being coupled to one of the low speed connections;
supplying data from each memory at low speed to a data multiplexer (4);
multiplexing the data;
temporarily storing the multiplexed data in a plurality of registers (5A-5E); and
supplying the data, at high speed, from the registers (5A-5E) to the digital signal processor (1).

## Patentansprüche

1. Digitales Verarbeitungssystem mit
einem mit einer Hochgeschwindigkeits-Adressenleitung und einer Hochgeschwindigkeits-Datenleitung gekoppelten Digitalsignal-Prozessor (1), der eine Folge von Speicheradressen synchron mit einem Systemtakt auf der Hochgeschwindigkeits-Adressenleitung erzeugt,
einem Adressen-Demultiplexer (2), der die Folge von speicheradressen empfängt und die einzelnen Adressen sequentiell auf jeweils eine von mehreren Niedergeschwindigkeits-Adressenleitungen synchron mit dem Systemtakt verteilt, wobei jede Niedergeschwindigkeits-Adressenleitung eine geringere Geschwindigkeit hat als die Hochgeschwindigkeits-Adressenleitung,
mehreren Speichern (3A - 3E) mit einer Datenzugriffs-Verzögerungszeit, die größer ist als eine Periode des Systemtaktes, wobei jeder Speicher (3A - 3E) mit einer der Niedergeschwindigkeits-Adressenleitungen und einer von mehreren Niedergeschwindigkeits-Datenleitungen zur Übertragung von Daten von dem jeweiligen Speicher gekoppelt ist, und wobei jede Niedergeschwindigkeits-Datenleitung eine geringere Geschwindigkeit hat als die Hochgeschwindigkeits-Datenleitung,
einem Daten-Multiplexer (4), der die Daten von jedem Speicher (3A - 3E) über die jeweilige Niedergeschwindigkeits-Datenleitung empfängt und synchron zu dem Systemtakt multiplex-verarbeitet, und
mehreren Registern (5A - 5E) zur Zwischenspeicherung der von dem Multiplexer (4) multiplex-verarbeiteten Daten und zur Abgabe der Daten über die Hochgeschwindigkeits-Datenleitung an den Digitalsignal-Prozessor (1).

2. Digitales Verarbeitungssystem nach Anspruch 1, wobei die Anzahl der Speicher (3A - 3E) ungefähr gleich dem Verhältnis von Datenzugriffs-Verzögerungszeit zur Periode des Systemtaktes ist.

3. Digitales Verarbeitungsverfahren, wobei
über einen Digitalsignal-Prozessor (1) eine Folge von Speicheradressen synchron zu einem Systemtakt erzeugt wird,
die Adressen mit hoher Geschwindigkeit einem Adressen-Demultiplexer (29 zugeführt werden und der Adressen-Demultiplexer (29) veranlaßt wird, die einzelnen Adressen mit niedriger Geschwindigkeit sequentiell über jeweils eine von mehreren Niedergeschwindigkeits-Verbindungen an jeweils einen von mehreren Speichern (3A - 3E) zu verteilen, wobei jeder Speicher (3A - 3E) eine Datenzugriffs-Verzögerungszeit aufweist, die größer ist als eine Periode des Datentaktes, und mit einer der Niedergeschwindigkeits-Verbindungen gekoppelt ist,
die Daten von jedem Speicher mit niedriger Geschwindigkeit einem Daten-Multiplexer (4) zugeführt werden,
die Daten multiplex-verarbeitet werden,
die multiplex-verarbeiteten Daten in mehreren Registern (5A - 5E) zwischengespeichert werden, und
die Daten von den Registern (5A - 5E) mit hoher Geschwindigkeit dem Digitalsignal-Prozessor (1) zugeführt werden.

## Revendications

1. Système de traitement numérique comportant :
un processeur numérique de signaux (1) connecté à un bus d'adresses à grand débit et à un bus de données à grand débit, ledit processeur numérique de signaux générant une série d'adresses de mémoire sur le bus d'adresses à grand débit synchronisé avec un signal d'horloge du système ;
un démultiplexeur d'adresses (2) recevant la série d'adresses de mémoire et envoyant séquentiellement chaque adresse individuelle à l'un d'une pluralité de bus d'adresses à faible débit synchronisés avec le signal d'horloge du système, chacun desdits bus d'adresses à faible débit ayant un débit inférieur à celui dudit bus d'adresses à grand débit ;
une pluralité de mémoires (3A à 3E) ayant un retard d'accès aux données supérieur à une période du signal d'horloge du système, chaque mémoire (3A à3E) étant connectée à l'un des bus d'adresses à faible débit et à l'un d'une pluralité de bus de données à faible débit pour transférer des données à partir de chacune desdites mémoires, chacun desdits bus de données à faible débit ayant un débit inférieur à celui dudit bus d'adresses à grand débit ;
un multiplexeur de données (4) recevant des données en provenance de chaque mémoire (3A à 3E) par l'intermédiaire de chaque bus de données à faible débit et multiplexant les données en synchronisme avec le signal d'horloge du système ; et
une pluralité de registres (5A à 5E) pour mémoriser temporairement les données multiplexées par ledit multiplexeur de données (4) et fournir les données audit processeur numérique de signaux (1) par l'intermédiaire du bus de données à grand débit.

2. Système de traitement numérique selon la revendication 1, dans lequel le nombre
desdites mémoires (3A à 3E) est approximativement égal au rapport entre le retard d'accès aux données et la période du signal d'horloge du système.

3. Procédé de traitement numérique comportant la génération, par un processeur
numérique de signaux (1), d'une série d'adresses de mémoire en synchronisme avec un signal d'horloge du système ;
la fourniture des adresses, à grand débit, à un démultiplexeur d'adresses (2) et l'envoi séquentiel par ledit démultiplexeur d'adresses (2) de chaque adresse individuelle, à faible débit, par l'une d'une pluralité de connexions à faible débit, à une mémoire correspondante d'une pluralité de mémoires (3A à 3E) , chaque mémoire (3A à 3E) ayant un retard d'accès aux données supérieur à une période du signal d'horloge des données, et chaque mémoire (3A à 3E) étant connectée à une des connexions à faible débit ;
la fourniture de données , à faible débit, à partir de chaque mémoire à un multiplexeur de données (4) ;
le multiplexage des données ;
la mémorisation temporaire des données multiplexées dans une pluralité de registres (5A à 5E) ; et
la fourniture des données, à grand débit, au processeur numérique de signaux (1) à partir des registres (5A à 5E).
